# EUROPÄISCHE PATENTSCHRIFT

(11) **EP 3 396 640 B1**
(45) Veröffentlichungstag und Bekanntmachung des Hinweises auf die Patenterteilung: **30.04.2025**
(21) Anmeldenummer: 18154674.8
(22) Anmeldetag: 01.02.2018
(51) Int. Cl.: G07C 9/00, B60R 25/24

(54) **TRAGBARER ID-GEBER FÜR EIN AUTHENTIFIZIERUNGSSYSTEM UND VERFAHREN ZUM BETREIBEN EINES AUTHENTIFIZIERUNGSSYSTEMS**
PORTABLE ID TRANSMITTER FOR AN AUTHENTICATION SYSTEM AND METHOD FOR OPERATING AN AUTHENTICATION SYSTEM
ÉMETTEUR D'IDENTIFICATION PORTABLE POUR UN SYSTÈME D'AUTHENTIFICATION ET PROCÉDÉ DE FONCTIONNEMENT D'UN SYSTÈME D'AUTHENTIFICATION

(30) Priorität: 28.04.2017 DE 102017109295; 06.09.2017 DE 102017120524
(43) Veröffentlichungstag der Anmeldung: 31.10.2018
(73) Patentinhaber: HUF Hülsbeck & Fürst GmbH & Co. KG, 42551 Velbert (DE)
(72) Erfinder: Schindler, Mirko, 42549 Velbert (DE); Neuhoff, Stefan, 45239 Essen (DE)
(74) Vertreter: Zenz Patentanwälte Partnerschaft mbB

(56) Entgegenhaltungen:
- EP-A1- 2 813 963
- EP-A2- 0 965 710
- EP-A2- 1 447 775
- EP-A2- 2 800 068
- WO-A1-2016/046105
- WO-A1-2016/059451
- GB-A- 2 538 341
- US-A1- 2007 162 191

## Beschreibung

Die Erfindung betrifft ein Authentifizierungssystem und ein Verfahren zum Betreiben des Authentifizierungssystems. Insbesondere bezieht sich die Erfindung auf ein Authentifizierungssystem, mit welchem eine Authentifizierung eines portablen ID-Gebers gegenüber dem Fahrzeug vorgenommen werden kann, um Fahrzeugfunktionen für einen Bediener freizugeben, der den portablen ID-Geber mit sich führt.

Aus dem Stand der Technik sind unterschiedliche sogenannte schlüssellose Zugangssysteme bekannt. Diese basieren auf der Kommunikation einer fahrzeugseitigen Infrastruktur mit einem portablen ID-Geber über Funk. Im Rahmen der durchgeführten Funkkommunikation wird die angestrebte Authentifizierung vorgenommen, beispielsweise durch Austausch und Prüfung verschlüsselter Berechtigungsdaten.

Aus der WO 2016/046105 A1 geht eine Anlage zum Verschließen/Öffnen und/oder Starten eines Fahrzeugs hervor, wobei eine BLE-Kommunikation und eine UWB-Kommunikation genutzt werden.

In der EP 0 965 710 A2 wird ein Fahrzeugsteuersystem beschrieben, das unter anderem vorsieht, dass mehrere Antennen an dem Fahrzeug angeordnet sind.

Die EP 2 800 068 A2 beschreibt ein Passive-Entry-Passive-Start-System (PEPS-System), das sich einer UWB-Funkkommunikation bedient.

Die US 2007/0162191 A1 beschreibt ein Steuersystem eines Fahrzeugs.

In der GB2538341 A wird ein Passive-Entry-Passive-Start-System (PEPS-System) mit einem ID-Geber offenbart, welches UWB-Funkkommunikation mit mehreren UWB-Antennen, LF-Wecksignale sowie UHF-Antwortsignale benutzt. Die WO 2016/059451 A1 beschreibt ebenfalls ein passives Zugangssystem zu einem Fahrzeug mit einem ID-Geber, in welchem UWB-Funkkommunikation mit mehreren parallelen UWB-Antennen implementiert und anhand der Signalstärke von LF-Signalen die Position des ID-Gebers bestimmt wird.

Im Bereich der schlüssellosen Zugangssysteme ist die Nutzung niederfrequenter (LF) sowie hochfrequenter (HF) Funkwellen bekannt und vielfach verwendet. Auch die kombinierte Kommunikation mittels LF-/HF-Systemen ist aus dem Stand der Technik bekannt.

Bei funkbasierten Berechtigungssystemen ist die Sicherheit, insbesondere vor Kompromittierung der durchgeführten Funkkommunikation, von entscheidender Bedeutung. Im Rahmen der Freigabe einer Fahrzeugfunktion unter Nutzung portabler ID-Geber ist die Bestimmung einer Position, eines Abstands oder einer ähnlichen Größe, beispielsweise zur Plausibilisierung der durchgeführten bidirektionalen Kommunikation, aus dem Stand der Technik bekannt. Beispielsweise ist bekannt, die Signalstärke einer LF-Funkkommunikation zwischen portablem ID-Geber und einer fahrzeugseitigen Authentifizierungsanordnung auszuwerten. Ein ergänzendes oder alternativ vorgesehenes Konzept zur Erhöhung der Sicherheit vor Kompromittierung kann schlicht darauf beruhen, dass die Sendeleistung einer LF-Kommunikation begrenzt wird. Durch Begrenzung der Sendeleistung einer LF-Kommunikation zwischen Fahrzeug und ID-Geber wird sichergestellt, dass beispielsweise ein LF-Wecksignals, welches von dem Fahrzeug zu dem ID-Geber gesendet wird, nur dann von dem jeweils anderen Kommunikationspartner empfangen werden kann, wenn ein Maximalabstand zwischen ID-Geber und Fahrzeug nicht überschritten wird.

Viele der bekannten Authentifizierungssysteme weisen nach wie vor den prinzipiellen Nachteil auf, dass eine LF-Funkkommunikation oder eine HF-Funkkommunikation verlängerbar ist, beispielsweise im Rahmen sogenannter Relay-Station-Attacken. Zur Vermeidung derartiger oder anderer Kompromittierungen sind Gegenmaßnahmen erforderlich, die jedoch teilweise aufwändig sind.

Es ist daher Aufgabe der Erfindung, die bekannten Authentifizierungsverfahren zu verbessern, sodass sie einen wirkungsvollen, zugleich aber auch vergleichsweise unaufwändigen Schutz vor einer Kompromittierung der übermittelten Signale bereitstellen.

Die Aufgabe wird erfindungsgemäß mit einem Authentifizierungssystem mit den Merkmalen des Anspruchs 1 und mit einem Verfahren mit den Merkmalen des Anspruchs 11 gelöst.

Erfindungsgemäß ist ein Authentifizierungssystem eines Fahrzeugs vorgesehen. Das Authentifizierungssystem weist einen tragbaren ID-Geber und eine fahrzeugseitige Authentifizierungsanordnung auf. Der ID-Geber weist in einem Gehäuse auf:
- eine Versorgungsbatterie,
- einen Mikrocontroller,
- von dem Mikrocontroller gesteuerte UWB-Sende- und Empfangsschaltungen zur Kommunikation mit einem fahrzeugseitigen Steuergerät,
- eine mit dem Mikrocontroller gekoppelte LF-Empfangsschaltung zum Empfangen von im LF-Frequenzbereich gesendeten LF-Wecksignalen.

Der Mikrocontroller ist eingerichtet, wenn die LF-Empfangsschaltung ein LF-Wecksignal empfangen hat, ein UWB-Signal auszusenden für einen Empfang durch eine UWB-Schnittstelle des Fahrzeugs, die mit dem fahrzeugseitigen Steuergerät gekoppelt ist. Ferner ist der Mikrocontroller eingerichtet, den Empfang eines UWB-Antwortsignals durch die UWB-Sende- und Empfangsschaltungen, welche auch eine geeignete UWB-Antenne aufweisen, zu erfassen. In Reaktion auf das erfasste UWB-Antwortsignal kann der Mikrocontroller die Zeitdifferenz zwischen Senden des UWB-Signals und Empfang des UWB-Antwortsignals erfassen und auswerten. Das Ergebnis der Auswertung kann von dem Mikrocontroller daraufhin ausgewertet werden, ob die Zeitdifferenz oder ein aus der Zeitdifferenz abgeleiteter Wert einen vorgegebenen Maximalwert nicht überschreitet. Der Mikrocontroller ist erfindungsgemäß ausgebildet, in Abhängigkeit von dem Ergebnis der Prüfung ein Funksignal an das fahrzeugseitige Steuergerät zu übermitteln, das einen Freigabewert aufweist.

Ein wesentlicher Aspekt des erfindungsgemäßen Verfahrens beruht auf der Nutzung von Ultrabreitband-Kommunikation.

Prinzipiell ist die Verwendung von Ultrabreitband-Funksignalen (UWB-Funksignalen) für manche Anwendungen aus dem Stand der Technik bekannt. Für die Nutzung stehen jedoch erst seit kurzem marktbereite Transceiver zur Verfügung.

Die Ultrabreitbandtechnologie ist in ihren Grundlagen seit Langem bekannt. Sie ist jedoch erst in jüngerer Vergangenheit, nicht zuletzt durch liberalere Regulation, für die Benutzung in weiten Anwendungsbereichen zugänglich geworden.

Bei der Ultrabreitbandtechnologie handelt es sich um eine Nahbereichs-Funkkommunikation, die auf dem Aussenden kurzer Signalpulse basiert, welche innerhalb einer großen Frequenzbandbreite eine Vielzahl von Frequenzen abdeckt. Die Breite der abgedeckten Frequenzbereiche ist insbesondere von regulatorischen Vorgaben des entsprechenden territorialen Gebiets abhängig. Eine Modulation der Signale erfolgt beispielsweise mit On/Off-Keying, Pulsamplitudenmodulation oder Pulspositionsmodulation.

Ein Nachteil der UWB-Kommunikation im Verhältnis zu der etablierten LF- und/oder HF-Kommunikation ist der bei vielen gegenwärtig verfügbaren, zur UWB-Kommunikation geeigneten Transceivern vergleichsweise hohe Energiebedarf.

Die UWB-Kommunikation weist jedoch den prinzipiellen Vorteil auf, dass aufgrund der Aussendung von Pulsen eine Entfernungsbestimmung mittels eines Laufzeit-basierten Ansatzes vorgenommen wird, worauf oft auch mit der Bezeichnung der Time-Of-Flight-Methode Bezug genommen wird. Beispielsweise kann die Entfernung zwischen der ersten UWB-Antenne und dem portablen ID-Geber ermittelt werden, indem ein UWB-Signal von der ersten UWB-Antenne zu dem portablen ID-Geber gesendet wird, ein UWB-Transceiver des portablen ID-Gebers dieses beantwortet und eine mit der ersten UWB-Antenne gekoppelte Einheit, beispielsweise ein Steuermittel, das erfasste Antwortsignal auswertet. Dies geschieht unter Auswertung der vergangenen Zeit zwischen Aussenden und Empfang. Berücksichtigt werden die Strecke zu dem ID-Geber hin, die Bearbeitungszeit innerhalb des ID-Gebers und die Strecke von dem ID-Geber weg zu der ersten UWB-Antenne hin. Wenn, wie in diesem Beispiel, die Laufzeit fahrzeugseitig ausgewertet wird, muss lediglich die Bearbeitungszeit innerhalb des ID-Gebers fahrzeugseitig hinterlegt sein, sodass eine entsprechende Korrektur der fahrzeugseitig gemessenen Zeit zwischen Aussenden des UWB-Signals und Empfang der UWB-Antwort vorgenommen werden kann.

Erfahrungsgemäß ist die Genauigkeit einer derart vorgenommenen Entfernungsbestimmung auf UWB-Basis bei den üblichen vorgesehenen Größenordnungen von Entfernungen deutlich höher, als es bei anderen Verfahren der Fall ist wie beispielsweise einer Signalstärkebestimmung, üblicherweise mittels RSSI-Messung von HF- beziehungsweise BLE-Kommunikation. Die Genauigkeit liegt bei den UWB-basierten Entfernungsbestimmungen häufig in der Größenordnung von 10 bis 20 cm.

Dadurch, dass die reine Laufzeit des UWB-Signals gegenüber der Bearbeitungszeit relativ kurz ist, würde eine zusätzliche Bearbeitung des Signals, beispielsweise für eine Manipulation des Signals etwa im Rahmen einer Relay-Station-Attacke, aufgrund der unerwartet hohen Gesamtdauer zwischen Aussenden eines UWB-Signals und Eintreffen der entsprechenden Antwort erkannt werden können. Kompromittierungen, beispielsweise in der Art der beschrieben Relay-Station-Attacken, sind dadurch, wenn überhaupt, nur mit sehr aufwändigen Methoden möglich.

Ein weiterer Vorteil, der sich durch die Nutzung der UWB-Signale ergibt, besteht darin, dass aufgrund der Vielzahl der verwendeten Frequenzen eine Abschattung der Signale sehr unwahrscheinlich ist. Dies liegt darin begründet, dass zumindest für einige der gleichzeitig verwendeten Frequenzen mit hoher Wahrscheinlichkeit immer eine Sichtlinie zwischen Sender und Empfänger besteht. Ein Grund hierfür ist, dass für manche Frequenzen Beugungseffekte oder Reflektionen erwartet werden können.

Erfindungsgemäß ist die Authentifizierungsanordnung ausgebildet zum
A) Auswählen einer UWB-Antenne aus der Anzahl der UWB-Antennen der Authentifizierungsanordnung als ausgewählte UWB-Antenne. Das Auswählen der UWB-Antenne erfolgt zumindest
   - in Abhängigkeit von einer Empfangssignalstärke oder mehreren Empfangssignalstärken wenigstens eines LF-Signals, das zwischen der Authentifizierungsanordnung und dem ID-Geber gesendet wird.
      Nicht erfindungsgemäße Ausbildungen können außerdem Auswählen vorsehen in Abhängigkeit von einer Empfangssignalstärke oder mehreren Empfangssignalstärken wenigstens eines HF-Signals, das zwischen dem ID-Geber und der Authentifizierungsanordnung gesendet wird, wobei beide möglichen Senderichtungen vorgesehen sein können, und/oder
   - in Abhängigkeit von wenigstens einem Annäherungssignal eines Annäherungssensors oder mehrerer Annäherungssensoren, die an dem Fahrzeug angeordnet sind;
Erfindungsgemäß ist weiterhin vorgesehen:
B) Ansteuern der ausgewählten UWB-Antenne zum Durchführen einer UWB-Kommunikation zwischen dem ID-Geber und der Authentifizierungsanordnung;
Erfindungsgemäß ist vorgesehen, dass der ID-Geber hardwaremäßig derart ausgestattet ist (genügend hohe Rechenleistung, Speichermittel mit genügend Speicherkapazität) und derart programmiert ist, dass er die Ermittlung der Entfernung des ID-Gebers von einem Fahrzeug, das eine UWB-Schnittstelle aufweist, vollständig selbstständig durchführen kann. Die Durchführung dieser Ermittlung umfasst das Aussenden eines UWB-Signals, mit welchem ein entsprechend auf den ID-Geber angepasster fahrzeugseitiger UWB-Transceiver und/oder eine fahrzeugseitige UWB-Antenne, die mit einem Steuergerät gekoppelt ist, veranlasst wird, ein UWB-Antwortsignal auszusenden.

Ferner umfasst die Ermittlung die Korrektur der zwischen Aussenden des UWB-Signals und Empfang des UWB-Antwortsignals vergangenen Zeit um die, dem ID-Geber vorab bekanntgegebene, Zeitdauer für von der fahrzeugseitigen Infrastruktur benötigte Empfangs-, Auswerte- und Sendeprozesse.

Im Grunde ist der wesentliche Aspekt die Prüfung, ob die erfasste Zeitdifferenz kleiner ist als die vorgegebene maximale Zeitdifferenz. Letztere ist in Kenntnis der elektronisch bedingten Latenz sowie als Vorgabe der maximal gewährten Laufzeit der Funkstrahlung, die unmittelbar mit einem maximal tolerierten Abstand verknüpft ist, vorgegeben. Die elektronisch bedingte Latenz resultiert beispielsweise aus der Signalbearbeitung in der fahrzeugseitigen Steuereinrichtung.

Das Veranlassen und das Durchführen der Erfassung des Abstands geht mit dem Vorteil einher, dass dem ID-Geber aufgrund des bereits erfolgten Weckens durch das LF-Signal - im Gegensatz zum Fahrzeug - bereits bekannt ist, dass er sich in einer Nähe des Fahrzeugs befindet. Eine Distanzmessung kann somit beginnen, ohne dass ein Auslösevorgang durch das Kraftfahrzeug hierfür erforderlich wäre. Dadurch kann potentiell die für die Abstandsbestimmung benötigte Zeitdauer reduziert werden. Ein weiterer Vorteil besteht darin, dass sich durch die LF-Signale, deren Empfang eine nur sehr geringe Energieaufnahme erfordert, bereits eine erste Vorselektion von potentiell anzusprechenden ID-Gebern ergeben hat. Fahrzeugseitig durchzuführende UWB-Kommunikation kann dadurch in ihrer Anzahl deutlich reduziert werden, wodurch eine Energieersparnis erreicht wird.

Bevorzugt ist das Funksignal ein UWB-Signal.

Wenn die Prüfung durch den ID-Geber ergibt, dass die Zeitdifferenz den vorgegebenen Wert nicht überschreitet, wird dies dem fahrzeugseitigen Steuergerät mitgeteilt. Hierzu wird ein Freigabewert mit einem Funksignal übermittelt, im einfachsten Fall beispielsweise ein binärer Wert oder ein Code, der dem fahrzeugseitigen Steuergerät zur Kenntnis bringt, dass die Abstandsprüfung durch den ID-Geber zu dem gewünschten Ergebnis geführt hat.

Eine Ausführungsform sieht vor, dass der Mikrocontroller eingerichtet ist, mit dem Funksignal einen Autorisierungscode zu übermitteln.

Beispielsweise kann vorgesehen sein, dass auf einem ID-Geber-seitigen Speichermittel, das mit dem Mikrocontroller gekoppelt ist, eine Challenge-Response-Liste abgelegt ist. Dabei kann vorgesehen sein, dass der Mikrocontroller ausgebildet ist, wenn das UWB-Antwortsignal einen Challenge-Wert umfasst, mit dem Funksignal einen dem Challenge-Wert zugeordneten Response-Wert zu übersenden.

Erfindungsgemäß ist der ID-Geber ausgebildet, eine Anzahl von LF-Signalen auf eine Identitätskennung hin zu prüfen, Signalstärkewerte für die LF-Signale zu erfassen und den Empfang der LF-Signale mit einem HF-Antwortsignal zu erwidern. Das HF-Antwortsignal umfasst die Identitätskennung des LF-Signals mit dem stärksten Signalstärkewert und/oder eine Liste der Identitätskennungen mit den zugeordneten Signalstärkewerten.

Erfindungsgemäß werden diese Informationen bei Implementierung eines geeigneten Verfahrens, etwa durch ein fahrzeugseitiges Steuergerät, verwendet werden, fahrzeugseitig aus einer Anzahl von am Fahrzeug beabstandet angeordneten UWB-Antennen eine Priorisierung vorzunehmen, welche der UWB-Antennen bevorzugt angesteuert wird.

Für das UWB-Antwortsignal kann ein vorgegebener Mindestzeitabstand nach dem HF-Antwortsignal vorgesehen sein. Dadurch kann eine zu erwartende weitere Bewegung eines Bedieners zu dem Fahrzeug hin antizipiert werden. Dadurch steigt die Wahrscheinlichkeit, dass der Bediener sich hinreichend nah an dem Fahrzeug befindet, dass dieses von dem UWB-Signal erreicht wird. Dadurch wird ein ansonsten gegebenenfalls erforderliches Aussenden eines weiteren UWB-Signals verzichtbar, wenn der Mindestzeitabstand (durch Empirie und in Abhängigkeit von den in Kauf genommenen Fehlauslösungen) geeignet angepasst ist.

Gemäß einer Ausbildung kann vorgesehen sein, dass der Mikrocontroller eine LF/HF-Kommunikation und eine UWB-Kommunikation zumindest teilweise parallel vornimmt mit dem Vorteil einer entsprechenden Zeitersparnis.

Gemäß einer weiteren Ausbildungsform kann vorgesehen sein, dass die LF-Empfangsschaltung und/oder die UWB-Sende- und Empfangsschaltungen zur Einnahme eines energiebedarfsreduzierten Zustands ausgebildet sind, in dem sie gegenüber ihrem normalen Betriebszustand nicht empfangsbereit und nicht sendebereit sind, und derart mit einem Bewegungssensor gekoppelt sind, dass bei Bewegen des ID-Gebers die LF-Empfangsschaltung und/oder die UWB-Sende- und Empfangsschaltungen in den normalen Betriebszustand versetzt werden.

Ferner kann vorgesehen sein, dass der ID-Geber als ausschließlich passiv aktivierbarer ID-Geber ausgebildet ist, dessen Gehäuse ohne manuell betätigbares Bedienelement ausgebildet ist. Dadurch wird der ID-Geber als Schlüsselanhänger verwendbar und dient ausschließlich einer passiven Funktionsfreigabe.

Für die Funktionalität als Schlüsselanhänger kann der ID-Geber ein mechanisches Kopplungselement aufweisen zum Ankoppeln eines Schlüssels.

Es kann ein zweiter ID-Geber vorgesehen sein, der als manueller HF-Funkschlüssel derart ausgebildet ist, dass mittels manueller Betätigung einer an dem zweiten ID-Geber angeordneten Taste ein an das fahrzeugseitige Steuergerät angepasstes HF-Anforderungssignal zur Anforderung einer Fahrzeugfunktion ausgesendet wird. Der zweite ID-Geber bildet mit dem ID-Geber ein Authentifizierungssystem. Die beiden ID-Geber des Authentifizierungssystems können mit dem mechanischen Kopplungselement, beispielsweise einem Schlüsselanhängerring, miteinander mechanisch verbunden werden, wobei keine Kommunikation zwischen den beiden erlaubt ist.

Gemäß diesem Gedanken ist also ein Schlüsselsystem aus dem ID-Geber und dem zweiten ID-Geber vorgesehen, wobei die Schlüssel zur Kommunikation mit demselben Fahrzeug ausgebildet sind, nicht aber untereinander kommunizieren können. Durch dieses Konzept wird eine gegenständliche Trennung zwischen passivem ID-Geber und aktivem ID-Geber (dem zweiten ID-Geber) ermöglicht, wodurch der Vorteil erreicht wird, dass zwei unabhängig voneinander arbeitenden ID-Gebern, je nach Ausstattung, jeweils eine vollständige Authentifizierung gegenüber dem Fahrzeug erlaubt ist und diese somit auch voneinander getrennt genutzt werden können. Beide können einander aber auch bei fehlender Funktionsfähigkeit eines der beiden, beispielsweise aufgrund einer leeren Batterie, als Backup dienen.

Ein weiterer Gedanke der Erfindung betrifft ein Verfahren. Das Verfahren sieht vor, dass ein Authentifizierungssystem eines Fahrzeugs betrieben wird, um einen portablen ID-Geber gegenüber dem Fahrzeug zu authentifizieren. Die Authentifizierung dient dem Zweck, eine Fahrzeugfunktion für einen Bediener freizugeben, der den portablen ID-Geber mit sich führt.

Das Authentifizierungssystem umfasst den portablen ID-Geber und eine fahrzeugseitige Authentifizierungsanordnung.

Die Authentifizierungsanordnung umfasst eine Anzahl von UWB-Antennen, jedenfalls wenigstens eine erste UWB-Antenne und eine zweite UWB-Antenne. Die erste UWB-Antenne und die zweite UWB-Antenne sind voneinander beabstandet an dem Fahrzeug angeordnet. Das Verfahren sieht zumindest die folgenden Schritte vor:
A) Auswählen einer UWB-Antenne aus der Anzahl der UWB-Antennen der Authentifizierungsanordnung als ausgewählte UWB-Antenne. Das Auswählen der UWB-Antenne erfolgt erfindungsgemäß zumindest
   - in Abhängigkeit von einer Empfangssignalstärke oder mehreren Empfangssignalstärken wenigstens eines LF-Signals, das zwischen der Authentifizierungsanordnung und dem ID-Geber gesendet wird, und/oder
   - nicht erfindungsgemäß in Abhängigkeit von einer Empfangssignalstärke oder mehreren Empfangssignalstärken wenigstens eines HF-Signals, das zwischen dem ID-Geber und der Authentifizierungsanordnung gesendet wird, wobei beide möglichen Senderichtungen vorgesehen sein können, und/oder
   - nicht erfindungsgemäß in Abhängigkeit von wenigstens einem Annäherungssignal eines Annäherungssensors oder mehrerer Annäherungssensoren, die an dem Fahrzeug angeordnet sind;
   Erfindungsgemäß erfolgt ein
B) Ansteuern der ausgewählten UWB-Antenne zum Durchführen einer UWB-Kommunikation zwischen dem ID-Geber und der Authentifizierungsanordnung;
C) Durchführen der UWB-Kommunikation zwischen dem ID-Geber und der Authentifizierungsanordnung;
D) Erfassen einer Laufzeit eines UWB-Signals der UWB-Kommunikation zwischen dem ID-Geber und der ausgewählten UWB-Antenne;
E) Prüfen, ob die Laufzeit des UWB-Signals kleiner ist als eine vorgegebene Maximallaufzeit.

Erfindungsgemäß ist vorgesehen, dass vor dem Ansteuern einer UWB-Antenne zum Durchführen einer UWB-Kommunikation aus der Anzahl der UWB-Antennen eine ausgewählte UWB-Antenne gewählt wird. Dadurch, dass eine ausgewählte UWB-Antenne gewählt wird, kann unter günstigen Umständen erreicht werden, dass die zur Entfernungsbestimmung benötigten Informationen unter Ansteuerung nur eines Teils der UWB-Antennen der Authentifizierungsanordnung gewonnen werden können. Wenn dies der Fall ist, kann auf eine weitere UWB-Kommunikation unter Verwendung der weiteren vorhandenen UWB-Antennen der Authentifizierungsanordnung verzichtet werden. Mit dem erfindungsgemäßen Verfahren wird also in vorteilhafter Weise erreicht, dass der Energiebedarf zur Durchführung von UWB-Kommunikation während eines Authentifizierungsvorgangs in vorteilhafter Weise reduziert wird.

Bevorzugt ist die erste UWB-Antenne Bestandteil eines ersten UWB-Transceivers und die zweite UWB-Antenne Bestandteil eines zweiten UWB-Transceivers. Dies erlaubt einen kompakten Aufbau und eine einfache Konfiguration.

Erfindungsgemäß ist vorgesehen, dass die ausgewählte UWB-Antenne angesteuert wird. Infolge des Ansteuerns der ausgewählten UWB-Antenne wird eine UWB-Kommunikation zwischen dem ID-Geber und der Authentifizierungsanordnung ermöglicht.

Zur Aussendung eines UWB-Signals wird der eingangs erläuterte ID-Geber verwendet, der, wiederum über eine UWB-Sende- und Empfangsschaltung (bevorzugt als UWB-Transceiver ausgebildet), das Aussenden eines UWB-Signals veranlasst, welches sodann von der ausgewählten UWB-Antenne erfasst wird und beantwortet wird, woraufhin die als UWB-Signal ausgesendete Antwort von dem ID-Geber erfasst und ausgewertet wird.

Um das Ansteuern der ausgewählten UWB-Antenne technisch zu realisieren, kann beispielsweise vorgesehen sein, dass die Authentifizierungsanordnung UWB-Transceiver aufweist, welche eine UWB-Antenne als Bestandteil aufweisen. Beispielsweise kann in einem regulären Zustand vorgesehenen sein, dass der erste UWB-Transceiver mit der ersten UWB-Antenne in einem nicht sende- und empfangsbereiten Zustand befindlich ist, und dass ein fahrzeugseitiges Steuergerät nach erfolgter Auswahl einer UWB-Antenne den UWB-Transceiver mit der ausgewählten UWB-Antenne ansteuert, um die UWB-Antenne in einen empfangsbereiten Zustand zu versetzen. Alternativ kann auch vorgesehen sein, dass das fahrzeugseitige Steuergerät die UWB-Antenne in analoger Weise in einen sendebereiten Zustand versetzt und das Versenden des erwähnten UWB-Signals über die ausgewählte UWB-Antenne veranlasst.

Mit dem Senden eines UWB-Signals und dem Beantworten des UWB-Signals ist das erfindungsgemäß vorgesehene Durchführen der UWB-Kommunikation erfolgt. Anschließend kann das Erfassen der Laufzeit des UWB-Signals erfolgen und die vorgesehene Prüfung vorgenommen werden, ob die Laufzeit des UWB-Signals kleiner ist als eine vorgegebene Maximallaufzeit.

Wenn die Laufzeit des UWB-Signals kleiner ist als eine vorgegebene Maximallaufzeit, kann fahrzeugseitig davon ausgegangen werden, dass keine Verlängerung der durchgeführten bidirektionalen UWB-Kommunikation vorgenommen wurde. Die Maximallaufzeit kann, je nach Sicherheitsbedürfnis, derart angepasst werden, dass einerseits eine hinreichend hohe Genauigkeit der Entfernungsbestimmung möglich ist, und andererseits davon ausgegangen werden kann, dass innerhalb der erfassten Maximallaufzeit eine erfolgte Kompromittierung des UWB-Signals ausgeschlossen oder weitgehend ausgeschlossen werden kann.

Der eingangs erläuterte ID-Geber befähigt das Fahrzeug somit, aus der Anzahl der vorhandenen UWB-Antennen eine ausgewählte Antenne zu ermitteln, die sodann zum Durchführen einer UWB-Kommunikation angesteuert wird. Dadurch, dass aus den vorhandenen UWB-Antennen eine UWB-Antenne ausgewählt wird, wird dem Implementierer des Verfahrens für eine konkrete Anwendung eine Möglichkeit an die Hand gegeben, in Abhängigkeit von einem oder mehreren zuvor erfassten Parametern den für eine UWB-Kommunikation erforderlichen Energieaufwand zu reduzieren. Je nachdem, welche Praktikabilitäts- und/oder Sicherheitsbedürfnisse von dem implementierenden Entwickler verfolgt werden oder zu beachten sind, kann auf unterschiedliche Parameter zurückgegriffen werden. Zweckmäßig ist, dass zur Erfassung dieser Parameter ein weniger energieintensives Verfahren genutzt wird als die UWB-Kommunikation oder dass auf ohnehin vorhandene, bereits erfasste, Parameter zurückgegriffen wird. Auf Grundlage dieser Daten kann dann mittels eines Steuermittels, vorzugsweise eines fahrzeugseitigen Steuermittels, bestimmt werden, mit welcher UWB-Antenne eine UWB-Kommunikation durchgeführt wird und/oder in welcher Reihenfolge verschiedene der vorhandenen UWB-Antennen für eine UWB-Kommunikation genutzt werden.

Erfindungsgemäß wird die Auswahl der UWB-Antenne in Abhängigkeit von einer Empfangssignalstärke eines LF-Signals vorgenommen, das von der Authentifizierungsanordnung zu dem ID-Geber gesendet wird, wie eingangs bereits angedeutet. Hierfür wird der eingangs erläuterte ID-Geber, der für LF-Kommunikationen eingerichtet sein kann, genutzt. Der Begriff der LF-Schnittstelle bezieht sich dabei auf eine Gesamtheit von Einrichtungen, die für eine LF-Kommunikation erforderlich sind und umfasst wenigstens eine LF-Antenne sowie eine Empfangsschaltung, die mit der LF-Antenne gekoppelt ist. Eine derartige Anordnung ist im Zusammenhang mit den eingangs erwähnten ID-Gebern, wie auch mit dem erfindungsgemäßen ID-Geber in einer seiner Weiterbildungen, sowieso in vielen Fällen vorgesehen. Beispielsweise kann ein LF-Signal von einer oder mehreren LF-Schnittstellen der fahrzeugseitigen Authentifizierungsanordnung zu dem ID-Geber gesendet werden, der diese mit einer LF-Empfangseinrichtung empfängt und hiernach die Signalstärke bestimmt. Beispielsweise kann vorgesehen sein, dass zwei an unterschiedlichen Positionen des Fahrzeugs angeordnete LF-Schnittstellen jeweils ein unterschiedlich kodiertes LF-Signal zu dem ID-Geber senden, und der ID-Geber die erfassten Signalstärkewerte, beispielsweise in Form von RSSI-Werten, gemeinsam mit dem jeweiligen Code des ID-Gebers an die fahrzeugseitigen HF-Schnittstellen zurücksendet. Derartige Daten können sodann von einer fahrzeugseitigen Steuereinrichtung ausgewertet werden. Als Resultat der Auswertung kann beispielsweise bestimmt werden, dass vorrangig diejenige UWB-Antenne aus der Anzahl der UWB-Antennen der Authentifizierungsanordnung angesteuert wird, welche der LF-Schnittstelle mit dem stärksten LF-Signal am nächsten ist.

In einer Weiterbildung des Verfahrens ist vorgesehen, dass zunächst die oben genannten Schritte B) bis E) mit einer ersten ausgewählten UWB-Antenne durchgeführt werden und, wenn die Laufzeit des UWB-Signals zwischen dem ID-Geber und der ersten ausgewählten Antenne größer ist als eine vorgegebene Maximallaufzeit, zumindest die Schritte B) bis E) erneut durchgeführt werden. Das erneute Durchführen der Schritte B) bis E) wird im Gegensatz zu dem ersten Durchführen der Schritte B) bis E) mit einer zweiten ausgewählten UWB-Antenne durchgeführt, mit dem Ziel zu prüfen, ob die Laufzeit des UWB-Signals zwischen dem ID-Geber und der zweiten ausgewählten Antenne kleiner ist als die vorgegebene Maximallaufzeit.

Es ist also vorgesehen, dass zusätzlich zu der Durchführung des erfindungsgemäßen Verfahrens unter Verwendung einer ersten ausgewählten Antenne im Misserfolg eine zweite UWB-Antenne der fahrzeugseitigen Authentifizierungsanordnung ausgewählt wird zur Durchführung einer Abstandsbestimmung. Dadurch wird erreicht, dass die Zuverlässigkeit des Verfahrens erhöht wird. In einem Fall, in dem beispielsweise ein - wenn auch unwahrscheinliches - Abschatten der ersten UWB-Antenne vorliegt, wird auch bei eigentlich genügend geringer Entfernung des ID-Gebers vom Fahrzeug ein falsches Ergebnis der Entfernungsbestimmung vermieden. Durch die sequenzielle Wiederholung der Verfahrensschritte B) bis E) zunächst mit der ersten UWB-Antenne und dann mit der zweiten UWB-Antenne wird unter Berücksichtigung einer Priorisierung der UWB-Antennen durchgeführt. Dadurch wird in vielen Fällen erreicht, dass das Verfahren bereits mit der ersten ausgewählten Antenne erfolgreich ist. Der Gewinn an Zuverlässigkeit geht somit nicht mit einer unverhältnismäßig hohen Erhöhung des Energiebedarfs einher.

Weitere Einzelheiten, Merkmale und Vorteile des erfindungsgemäßen Verfahrens und seiner Weiterbildung ergeben sich aus der nachfolgenden Beschreibung in Zusammenhang mit den Zeichnungen, in denen beispielhaft Ausführungsbeispiele der Erfindung dargestellt sind.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind. Es zeigen:
Fig. 1: eine schematische Darstellung eines erfindungsgemäßen ID-Gebers und eines Authentifizierungssystems eines Fahrzeugs;
Fig. 2: ein Flussdiagramm einer beispielhaften Verfahrensfolge des erfindungsgemäßen Verfahrens.

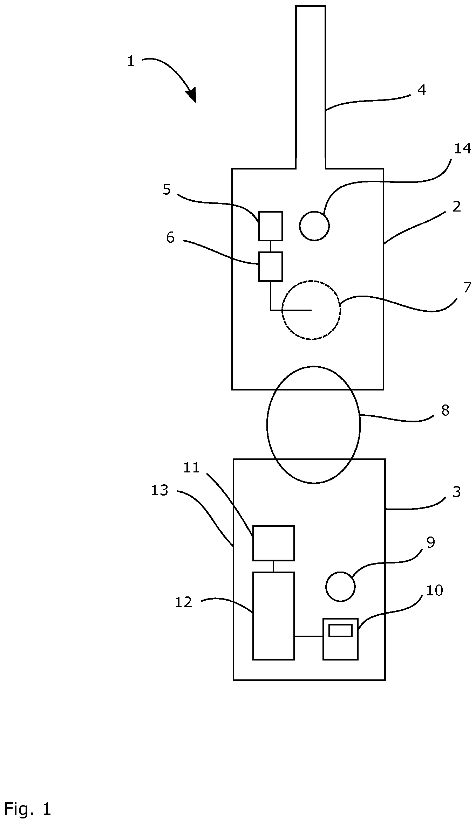

Fig. 1 ist Schlüsselsystem 1 für ein Authentifizierungssystem eines Fahrzeugs zu entnehmen. Das Schlüsselsystem 1 umfasst eine Ausgestaltung des erfindungsgemäßen ID-Gebers 3 sowie einen zweiten ID-Geber 2**.** Der ID-Geber 3 weist eine Versorgungsbatterie 9 auf. Ferner sind vorhanden:
- ein Mikrocontroller 12,
- von dem Mikrocontroller 12 gesteuerte und mit diesem verbundene UWB-Sende- und Empfangsschaltungen 11 zur Kommunikation mit einem fahrzeugseitigen Steuergerät,
- eine mit dem Mikrocontroller 12 gesteuerte und mit diesem verbundene LF-Empfangsschaltung 10 zum Empfangen von im LF-Frequenzbereich gesendeten LF-Wecksignalen. Der ID-Geber 3 weist darüber hinaus ein Gehäuse 13 auf, das als geschlossenes Gehäuse ausgebildet ist, das keine Bedienelemente aufweist. Der zweite ID-Geber 2 weist eine HF-Sende- und Empfangsschnittstelle 5 auf, die von einem Mikrocontroller 6 gesteuert ist und mit welcher bei Tastendruck auf das als Taste ausgebildete Bedienelement 7 eine Freigabe einer Funktion eines Fahrzeugs bewirkt wird. Es ist ausschließlich die aktive Betätigung vorgesehen, aber keine passive Funktionalität des zweiten ID-Gebers. Zur mechanischen Funktionsfreigabe ist ein Schlüsselbart 4 vorgesehen. Ein als Verbindungsring ausgebildetes mechanisches Kopplungselement 8 verbindet den ID-Geber und den zweiten ID-Geber trennbar und wiederverbindbar miteinander; der ID-Geber fungiert also als Schlüsselanhänger.

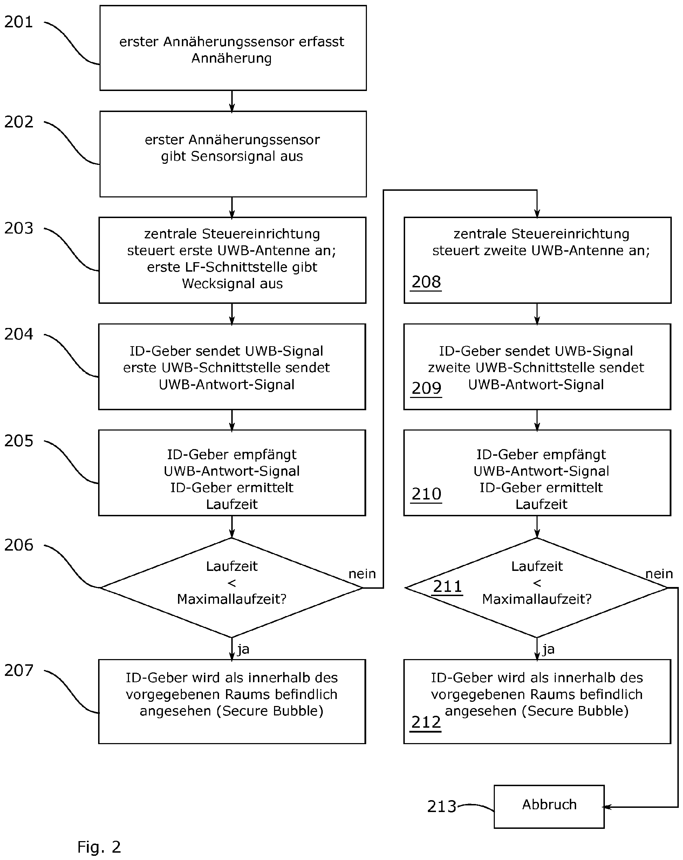

Fig. 2 ist eine erste mögliche Verfahrensführung des erfindungsgemäßen Verfahrens unter Nutzung des erfindungsgemäßen ID-Gebers zu entnehmen.

Die beispielhaft dargestellte Verfahrensführung sieht vor, dass in einem Schritt 201 die Annäherung eines Bedieners an den ersten Annäherungssensor festgestellt wird. Der Annäherungssensor gibt in Schritt 202 ein entsprechendes Annäherungssignal aus. Dadurch, dass der erste Annäherungssensor und die Antenne der ersten Fahrzeug-UWB-Schnittstelle in dem Türgriff angeordnet sind und miteinander gekoppelt sind, ist vorgesehen, dass das erste Steuermittel die erste UWB-Antenne aus einem nicht sende- und/oder empfangsbereiten Zustand in einen sendebereiten Zustand versetzt (Schritt 203). Mit einer ersten fahrzeugseitigen LF-Schnittstelle wird ein LF-Wecksignal ausgegeben (Schritt 203) sowie durch das erste Steuermittel eine Fahrzeug-UWB-Schnittstelle angesteuert zum Versetzen der ersten Fahrzeug-UWB-Schnittstelle aus einem nicht sende- und/oder empfangsbereiten Zustand in einen zumindest empfangsbereiten Zustand. Der ID-Geber sendet nun ein UWB-Signal, welches die erste Fahrzeug-UWB-Schnittstelle empfängt. Das ausgesendete UWB-Signal beantwortet die UWB-Schnittstelle des Fahrzeugs mit einem UWB-Antwortsignal (Schritt 204). Der ID-Geber empfängt das Antwort-Signal und ermittelt eine Laufzeit des UWB-Signals und des UWB-Antwortsignals zwischen ID-Geber und erster Fahrzeug-UWB-Schnittstelle. Die Laufzeit oder einen aus ihr abgeleiteten Parameter übermittelt der ID-Geber, bevorzugt mittels UWB, an einen Datenempfänger des Fahrzeugs (Schritt 205). Nach Erfassen der Laufzeit des UWB-Signals zwischen der ID-Geber-Schnittstelle und der ersten Fahrzeug-UWB-Schnittstelle prüft der ID-Geber, ob die Laufzeit des UWB-Signals kleiner ist als eine vorgegebene Maximallaufzeit. Wenn dies der Fall ist, gilt der ID-Geber als innerhalb des Raums befindlich, in dem eine Freigabe ermöglicht wird (Secure Bubble). Ferner gilt eine Kompromittierung des Signals, beispielsweise durch eine Relay-Station-Attacke, als nicht erfolgt. Wenn hingegen in Schritt 206 festgestellt wird, dass die Laufzeit größer ist als die vorgegebene Maximallaufzeit, wird mit Schritt 208 die Verfahrensfolge analog, jedoch unter Verwendung der zweiten UWB-Antenne fortgesetzt.

## Patentansprüche

1. Authentifizierungssystem für ein Fahrzeug, aufweisend einen tragbaren ID-Geber (3) und eine fahrzeugzeitige Authentifizierungsanordnung, wobei die Authentifizierungsanordnung eine Anzahl von UWB-Antennen umfasst mit wenigstens einer ersten UWB-Antenne und einer zweiten UWB-Antenne, die voneinander beabstandet an dem Fahrzeug angeordnet sind,
wobei der ID-Geber (3) in einem Gehäuse (13) aufweist:
- eine Versorgungsbatterie (9),
- einen Mikrocontroller (12),
- von dem Mikrocontroller (12) gesteuerte UWB-Sende- und Empfangsschaltungen (11) zur Kommunikation mit einem fahrzeugseitigen Steuergerät,
- eine mit dem Mikrocontroller (12) gekoppelte LF-Empfangsschaltung (10) zum Empfangen von im LF-Frequenzbereich gesendeten LF-Wecksignalen,
wobei
der Mikrocontroller (12) eingerichtet ist, wenn die LF-Empfangsschaltung ein LF-Wecksignal empfangen hat,
ein UWB-Signal auszusenden für einen Empfang durch eine UWB-Schnittstelle des Fahrzeugs, die mit dem fahrzeugseitigen Steuergerät gekoppelt ist,
ein UWB-Antwortsignal zu empfangen,
die Zeitdifferenz zwischen Senden des UWB-Signals und Empfang des UWB-Antwortsignals zu erfassen,
zu prüfen, ob die Zeitdifferenz oder ein aus der Zeitdifferenz abgeleiteter Wert einen vorgegebenen Maximalwert nicht überschreitet, sowie
in Abhängigkeit von dem Ergebnis der Prüfung ein Funksignal an das fahrzeugseitige Steuergerät zu übermitteln, das einen Freigabewert aufweist
wobei der ID-Geber ausgebildet ist, eine Anzahl von LF-Signalen auf eine Identitätskennung hin zu prüfen, Signalstärkewerte für die LF-Signale zu erfassen und den Empfang der LF-Signale mit einem HF-Antwortsignal zu erwidern, das
die Identitätskennung des LF-Signals mit dem stärksten Signalstärkewert und/oder
eine Liste der Identitätskennungen mit den zugeordneten Signalstärkewerten umfasst,
wobei die Authentifizierungsanordnung ausgebildet ist,
ein Auswählen einer UWB-Antenne aus der Anzahl der UWB-Antennen der Authentifizierungsanordnung als ausgewählte UWB-Antenne durchzuführen, wobei das Auswählen der UWB-Antenne erfolgt zumindest in Abhängigkeit von der Empfangssignalstärke oder den Empfangssignalstärken des wenigstens einen LF-Signals, das zwischen einer LF-Schnittstelle der Authentifizierungsanordnung und dem ID-Geber gesendet wird;
und ein Ansteuern der ausgewählten UWB-Antenne zum Durchführen der UWB-Kommunikation zwischen dem ID-Geber und der Authentifizierungsanordnung durchzuführen.

2. Authentifizierungssystem nach Anspruch 1, **dadurch gekennzeichnet, dass** der Mikrocontroller eingerichtet ist, als Funksignal ein UWB-Signal an das fahrzeugseitige Steuergerät zu übermitteln.

3. Authentifizierungssystem nach Anspruch 1 oder nach Anspruch 2, **dadurch gekennzeichnet, dass** der Mikrocontroller eingerichtet ist, mit dem Funksignal einen Autorisierungscode zu übermitteln.

4. Authentifizierungssystem nach Anspruch 3, **dadurch gekennzeichnet, dass** auf einem ID-Geber-seitigen Speichermittel, das mit dem Mikrocontroller (12) gekoppelt ist, eine Challenge-Response-Liste abgelegt ist, und dass der Mikrocontroller (12) ausgebildet ist, wenn das UWB-Antwortsignal einen Challenge-Wert umfasst, mit dem Funksignal einen dem Challenge-Wert zugeordneten Response-Wert zu übersenden.

5. Authentifizierungssystem nach einem der vorherigen Ansprüche, **dadurch gekennzeichnet, dass** das UWB-Signal mit einem vorgegebenen Mindestzeitabstand nach dem HF-Antwortsignal gesendet wird.

6. Authentifizierungssystem nach einem der vorherigen Ansprüche, **dadurch gekennzeichnet, dass** der Mikrocontroller ausgebildet ist, eine LF-Kommunikation und eine UWB-Kommunikation zumindest teilweise parallel vorzunehmen.

7. Authentifizierungssystem nach einem der vorherigen Ansprüche, **dadurch gekennzeichnet, dass** die LF-Empfangsschaltung und/oder die UWB-Sende- und Empfangsschaltungen zur Einnahme eines energiebedarfsreduzierten Zustands ausgebildet sind, in dem sie gegenüber ihrem normalen Betriebszustand nicht empfangsbereit und nicht sendebereit sind, und derart mit einem Bewegungssensor gekoppelt sind, dass bei Bewegen des ID-Gebers die LF-Empfangsschaltung und/oder die UWB-Sende- und Empfangsschaltungen in den normalen Betriebszustand versetzt wird/werden.

8. Authentifizierungssystem nach einem der vorherigen Ansprüche, **dadurch gekennzeichnet, dass** der ID-Geber (3) als ausschließlich passiv aktivierbarer ID-Geber (3) ausgebildet ist, dessen Gehäuse (13) ohne manuell betätigbares Bedienelement ausgebildet ist.

9. Authentifizierungssystem nach Anspruch 8, **dadurch gekennzeichnet, dass** der ID-Geber ein mechanisches Kopplungselement (8) aufweist zum Ankoppeln eines Schlüssels (2) .

10. Authentifizierungssystem für ein Fahrzeug nach einem der vorhergehenden Ansprüche, aufweisend den ID-Geber (3) sowie einen zweiten ID-Geber (2), wobei der zweite ID-Geber (2) als manueller HF-Funkschlüssel derart ausgebildet ist, dass mittels manueller Betätigung einer an dem zweiten ID-Geber (2) angeordneten Taste (7) ein an das fahrzeugseitige Steuergerät angepasstes HF-Anforderungssignal zur Anforderung einer Fahrzeugfunktion ausgesendet wird, sodass der ID-Geber (3) und der zweite ID-Geber (2) ein Schlüsselsystem bilden und zur Kommunikation mit einem selben Fahrzeug, nicht aber untereinander, ausgebildet sind.

11. Verfahren zum Betreiben eines
Authentifizierungssystems eines Fahrzeugs zur Authentifizierung eines portablen ID-Gebers gegenüber dem Fahrzeug zur Freigabe von Fahrzeugfunktionen für einen Bediener, der den portablen ID-Geber mit sich führt,
wobei der ID-Geber (3) in einem Gehäuse (13) aufweist:
- eine Versorgungsbatterie (9),
- einen Mikrocontroller (12),
- von dem Mikrocontroller (12) gesteuerte UWB-Sende- und Empfangsschaltungen (11) zur Kommunikation mit einem fahrzeugseitigen Steuergerät,
- eine mit dem Mikrocontroller (12) gekoppelte LF-Empfangsschaltung (10) zum Empfangen von im LF-Frequenzbereich gesendeten LF-Wecksignalen,
wobei
der Mikrocontroller (12) eingerichtet ist, wenn die LF-Empfangsschaltung ein LF-Wecksignal empfangen hat,
ein UWB-Signal auszusenden für einen Empfang durch eine UWB-Schnittstelle des Fahrzeugs, die mit dem fahrzeugseitigen Steuergerät gekoppelt ist,
ein UWB-Antwortsignal zu empfangen,
die Zeitdifferenz zwischen Senden des UWB-Signals und Empfang des UWB-Antwortsignals zu erfassen,
zu prüfen, ob die Zeitdifferenz oder ein aus der Zeitdifferenz abgeleiteter Wert einen vorgegebenen Maximalwert nicht überschreitet, sowie
in Abhängigkeit von dem Ergebnis der Prüfung ein Funksignal an das fahrzeugseitige Steuergerät zu übermitteln, das einen Freigabewert aufweist
wobei der ID-Geber ausgebildet ist, eine Anzahl von LF-Signalen auf eine Identitätskennung hin zu prüfen, Signalstärkewerte für die LF-Signale zu erfassen und den Empfang der LF-Signale mit einem HF-Antwortsignal zu erwidern, das
die Identitätskennung des LF-Signals mit dem stärksten Signalstärkewert und/oder
eine Liste der Identitätskennungen mit den zugeordneten Signalstärkewerten umfasst,
wobei das Authentifizierungssystem den portablen ID-Geber und eine fahrzeugseitige Authentifizierungsanordnung umfasst, wobei die Authentifizierungsanordnung eine Anzahl von UWB-Antennen umfasst mit wenigstens einer ersten UWB-Antenne und einer zweiten UWB-Antenne, die voneinander beabstandet an dem Fahrzeug angeordnet sind,
wobei das Verfahren zumindest die folgenden Schritte umfasst:
A) Auswählen einer UWB-Antenne durch ein fahrzeugseitiges Steuergerät aus der Anzahl der UWB-Antennen der Authentifizierungsanordnung als ausgewählte UWB-Antenne, wobei das Auswählen der UWB-Antenne erfolgt zumindest in Abhängigkeit von einer Empfangssignalstärke oder mehreren Empfangssignalstärken des wenigstens einen LF-Signals, das zwischen der LF-Schnittstelle der Authentifizierungsanordnung und dem ID-Geber gesendet wird;
B) Ansteuern der ausgewählten UWB-Antenne zum Durchführen der UWB-Kommunikation zwischen dem ID-Geber und der Authentifizierungsanordnung;
C) Durchführen der UWB-Kommunikation zwischen dem ID-Geber und der Authentifizierungsanordnung;
D) Erfassen einer Laufzeit eines UWB-Signals der UWB-Kommunikation zwischen dem ID-Geber und der ausgewählten UWB-Antenne;
E) Prüfen, ob die Laufzeit des UWB-Signals kleiner ist als eine vorgegebene Maximallaufzeit, wobei das UWB-Signal von dem ID-Geber erfasst und ausgewertet wird.

12. Verfahren nach Anspruch 11, wobei die Schritte B) bis E) mit einer ersten ausgewählten UWB-Antenne durchgeführt werden und,
wenn die Laufzeit des UWB-Signals zwischen dem ID-Geber und der ersten ausgewählten Antenne größer ist als eine vorgegebene Maximallaufzeit,
zumindest die Schritte B) bis E) mit einer zweiten ausgewählten UWB-Antenne durchgeführt werden zum Prüfen, ob die Laufzeit des UWB-Signals zwischen dem ID-Geber und der zweiten ausgewählten Antenne kleiner ist als die vorgegebene Maximallaufzeit, welche eine Position des ID-Gebers innerhalb eines vorgegebenen Raums repräsentiert, der die zweite ausgewählte UWB-Antenne umgibt.

## Claims

1. Authentication system for a vehicle, comprising a portable ID transmitter (3) and a vehicle-side authentication arrangement, wherein the authentication arrangement comprises a number of UWB antennas with at least a first UWB antenna and a second UWB antenna arranged at a distance from each other on the vehicle,
wherein the ID transmitter (3) has a housing (13):
- a supply battery (9),
- a microcontroller (12),
- UWB transmitter and receiver circuits (11) controlled by the microcontroller (12) for communication with a control unit on the vehicle,
- an LF receiver circuit (10) coupled to the microcontroller (12) for receiving LF wake-up signals transmitted in the LF frequency range,
whereby
the microcontroller (12) is set up to, when the LF receiver circuit has received an LF wake-up signal, transmit a UWB signal for reception by a UWB interface of the vehicle, which is coupled to the vehicle's control unit,
to receive a UWB response signal,
to capture the time difference between sending the UWB signal and receiving the UWB response signal,
to check whether the time difference or a value derived from the time difference does not exceed a specified maximum value, and
depending on the result of the checking, transmit a radio signal to the vehicle's control unit that has an enable value
wherein the ID transmitter is designed to check a number of LF signals for an identity identifier, to detect signal strength values for the LF signals and to respond to the reception of the LF signals with an RF response signal which includes
the identity code of the LF signal with the strongest signal strength value and/or
a list of identity codes with the assigned signal strength values,
whereby the authentication arrangement is designed to carry out:
selecting a UWB antenna from the number of UWB antennas of the authentication arrangement as the selected UWB antenna, the UWB antenna being selected at least as a function of the received signal strength or the received signal strengths of the at least one LF signal which is transmitted between an LF interface of the authentication arrangement and the ID transmitter;
and controlling the selected UWB antenna to perform UWB communication between the ID transmitter and the authentication device.

2. Authentication system according to claim 1, **characterised in that** the microcontroller is set up to transmit a UWB signal to the control unit on the vehicle as the radio signal.

3. Authentication system according to claim 1 or claim 2, **characterised in that** the microcontroller is set up to transmit an authorisation code with the radio signal.

4. Authentication system according to claim 3, **characterised in that** a challenge-response list is stored on a memory means on the ID transmitter side, which is coupled to the microcontroller (12), and **in that** the microcontroller (12) is designed to transmit a response value assigned to the challenge value with the radio signal, if the UWB response signal comprises a challenge value.

5. Authentication system according to one of the preceding claims, **characterised in that** the UWB signal is transmitted with a predetermined minimum time interval after the RF response signal.

6. Authentication system according to one of the preceding claims, **characterised in that** the microcontroller is designed to carry out LF communication and UWB communication at least partially in parallel.

7. Authentication system according to one of the preceding claims, **characterised in that** the LF receiving circuit and/or the UWB transmitting and receiving circuits are designed to assume an energy-reduced state, in which they are not ready to receive and not ready to transmit compared to their normal operating state, and are coupled to a motion sensor in such a way that when the ID transmitter is moved, the LF receiving circuit and/or the UWB transmitting and receiving circuits are/are set to the normal operating state.

8. Authentication system according to one of the preceding claims, **characterised in that** the ID transmitter (3) is designed as an exclusively passively activatable ID transmitter (3), the housing (13) of which is designed without a manually operable operating element.

9. Authentication system according to claim 8, **characterised in that** the ID transmitter has a mechanical coupling element (8) for coupling a key (2).

10. Authentication system for a vehicle according to one of the preceding claims, comprising the ID transmitter (3) and a second ID transmitter (2), wherein the second ID transmitter (2) is designed as a manual HF radio key in such a way that by manually actuating a button (7) arranged on the second ID transmitter (2), an RF request signal adapted to the control unit on the vehicle is transmitted to request a vehicle function, so that the ID transmitter (3) and the second ID transmitter (2) form a key system and are designed to communicate with a same vehicle, but not with each other.

11. Method of operating an authentication system of a vehicle for authenticating a portable ID transmitter to the vehicle for enabling vehicle functions for an operator carrying the portable ID transmitter,
wherein the ID transmitter (3) has in a housing (13):
- a supply battery (9),
- a microcontroller (12),
- UWB transmitter and receiver circuits (11) controlled by the microcontroller (12) for communication with a control unit on the vehicle,
- an LF receiver circuit (10) coupled to the microcontroller (12) for receiving LF wake-up signals transmitted in the LF frequency range,
whereby
the microcontroller (12) is set up to, when the LF receiver circuit has received an LF wake-up signal, transmit a UWB signal for reception by a UWB interface of the vehicle, which is coupled to the vehicle's control unit,
to receive a UWB response signal,
to record the time difference between sending the UWB signal and receiving the UWB response signal,
to check whether the time difference or a value derived from the time difference does not exceed a specified maximum value, and
depending on the result of the checking, transmit a radio signal to the vehicle's control unit that has an enable value
wherein the ID transmitter is designed to check a number of LF signals for an identity identifier, to detect signal strength values for the LF signals and to respond to the reception of the LF signals with an RF response signal which includes
the identity code of the LF signal with the strongest signal strength value and/or
a list of identity codes with the assigned signal strength values,
wherein the authentication system comprises the portable ID transmitter and a vehicle-side authentication arrangement, wherein the authentication arrangement comprises a number of UWB antennas with at least a first UWB antenna and a second UWB antenna arranged spaced apart from each other on the vehicle,
wherein the method comprises at least the following steps:
A) Selecting a UWB antenna by a control device on the vehicle side from the number of UWB antennas of the authentication arrangement as the selected UWB antenna, wherein the selection of the UWB antenna takes place at least as a function of a received signal strength or several received signal strengths of the at least one LF signal which is transmitted between the LF interface of the authentication arrangement and the ID transmitter;
B) Controlling the selected UWB antenna to perform UWB communication between the ID transmitter and the authentication device;
C) Carrying out the UWB communication between the ID transmitter and the authentication device;
D) Detecting of a runtime of a UWB signal of the UWB communication between the ID transmitter and the selected UWB antenna;
E) Checking whether the runtime of the UWB signal is shorter than a specified maximum runtime, whereby the UWB signal is detected and analysed by the ID transmitter.

12. Method according to claim 11, wherein steps B) to E) are carried out with a first selected UWB antenna and,
if the propagation time of the UWB signal between the ID transmitter and the first selected antenna is greater than a specified maximum propagation time,
at least steps B) to E) are performed with a second selected UWB antenna to check whether the propagation time of the UWB signal between the ID transmitter and the second selected antenna is less than the predetermined maximum propagation time, which represents a position of the ID transmitter within a predetermined space surrounding the second selected UWB antenna.

## Revendications

1. Système d'authentification pour un véhicule, comprenant un émetteur d'identification portable (3) et un dispositif d'authentification à bord du véhicule, dans lequel le dispositif d'authentification comprends un certain nombre d'antennes UWB avec au moins une première antenne UWB et une deuxième antenne UWB, qui sont disposées à distance l'une de l'autre sur le véhicule,
dans lequel le transmetteur ID (3) présente dans un boîtier (13) :
- une batterie d'alimentation (9),
- un microcontrôleur (12),
- des circuits d'émission et de réception UWB (11) commandés par le microcontrôleur (12) pour communiquer avec un appareil de commande embarqué dans le véhicule,
- un circuit de réception LF (10) couplé au microcontrôleur (12) pour recevoir des signaux de réveil LF émis dans la gamme de fréquences LF,
où
le microcontrôleur (12) est adapté lorsque le circuit de réception LF a reçu un signal de réveil LF,
émettre un signal UWB destiné à être reçu par une interface UWB du véhicule couplée à l'unité de commande embarquée,
recevoir un signal de réponse UWB,
de détecter la différence de temps entre l'émission du signal UWB et la réception du signal de réponse UWB,
de vérifier que la différence de temps ou une valeur dérivée de la différence de temps ne dépasse pas une valeur maximale prédéfinie, et
en fonction du résultat du contrôle, transmettre au calculateur embarqué un signal radio présentant une valeur de validation
le transmetteur d'identité étant conçu pour contrôler un certain nombre de signaux LF en vue d'une identification, pour détecter des valeurs d'intensité de signal pour les signaux LF et pour répondre à la réception des signaux LF par un signal de réponse HF qui est
l'identifiant du signal LF ayant la valeur d'intensité de signal la plus forte et/ou
comprend une liste des identifiants d'identité avec les valeurs d'intensité de signal associées,
dans lequel le dispositif d'authentification est formé, sélectionner une antenne UWB parmi le nombre d'antennes UWB du dispositif d'authentification en tant qu'antenne UWB sélectionnée, la sélection de l'antenne UWB s'effectuant au moins en fonction de l'intensité du signal de réception ou des intensités du signal de réception du au moins un signal LF qui est transmis entre une interface LF du dispositif d'authentification et le transmetteur ID ;
et à effectuer une commande de l'antenne UWB sélectionnée pour réaliser la communication UWB entre le transmetteur ID et l'ensemble d'authentification.

2. Système d'authentification selon la revendication 1, **caractérisé en ce que** le microcontrôleur est agencé pour transmettre, en tant que signal radio, un signal UWB à l'appareil de commande embarqué.

3. Système d'authentification selon la revendication 1 ou selon la revendication 2, **caractérisé en ce que** le microcontrôleur est agencé pour transmettre un code d'autorisation avec le signal radio.

4. Système d'authentification selon la revendication 3, **caractérisé en ce qu'**une liste de réponses de défi est stockée sur un moyen de stockage côté donneur d'ID, qui est couplé au microcontrôleur (12), et **en ce que** le microcontrôleur (12) est conçu, lorsque le signal de réponse UWB comprend une valeur de défi, pour transmettre avec le signal radio une valeur de réponse associée à la valeur de défi.

5. Système d'authentification selon l'une quelconque des revendications précédentes, **caractérisé en ce que** le signal UWB est émis avec un intervalle de temps minimum prédéterminé après le signal de réponse RF.

6. Système d'authentification selon l'une quelconque des revendications précédentes, **caractérisé en ce que** le microcontrôleur est conçu pour effectuer une communication LF et une communication UWB au moins partiellement en parallèle.

7. Système d'authentification selon l'une quelconque des revendications précédentes, **caractérisé en ce que** le circuit de réception LF et/ou les circuits d'émission et de réception UWB sont conçus pour prendre un état à consommation d'énergie réduite, dans lequel ils ne sont pas prêts à recevoir et ne sont pas prêts à émettre par rapport à leur état de fonctionnement normal, et sont couplés à un capteur de mouvement de telle sorte que, lorsque le donneur d'identité est déplacé, le circuit de réception LF et/ou les circuits d'émission et de réception UWB sont placés dans leur état de fonctionnement normal.

8. Système d'authentification selon l'une des revendications précédentes, **caractérisé en ce que** le transmetteur d'identification (3) est conçu comme un transmetteur d'identification (3) pouvant être activé exclusivement de manière passive, dont le boîtier (13) est conçu sans élément de commande pouvant être actionné manuellement.

9. Système d'authentification selon la revendication 8, **caractérisé en ce que** le transmetteur ID comporte un élément de couplage mécanique (8) pour coupler une clé (2).

10. Système d'authentification pour un véhicule selon l'une quelconque des revendications précédentes, présentant le transmetteur ID (3) ainsi qu'un deuxième transmetteur ID (2), le deuxième transmetteur ID (2) étant conçu comme une clé radio HF manuelle de telle manière, qu'au moyen d'un actionnement manuel d'une touche (7) disposée sur le deuxième transmetteur ID (2), un signal de demande HF adapté à l'appareil de commande côté véhicule est émis pour demander une fonction du véhicule, de sorte que le transmetteur ID (3) et le deuxième transmetteur ID (2) forment un système de clé et sont conçus pour communiquer avec un même véhicule, mais pas entre eux.

11. Procédé de fonctionnement d'un système d'authentification d'un véhicule pour authentifier un émetteur d'identification portable par rapport au véhicule afin de permettre des fonctions du véhicule à un opérateur portant l'émetteur d'identification portable,
dans lequel le transmetteur ID (3) présente dans un boîtier (13) :
- une batterie d'alimentation (9),
- un microcontrôleur (12),
- des circuits d'émission et de réception UWB (11) commandés par le microcontrôleur (12) pour communiquer avec un appareil de commande embarqué dans le véhicule,
- un circuit de réception LF (10) couplé au microcontrôleur (12) pour recevoir des signaux de réveil LF émis dans la gamme de fréquences LF,
où
le microcontrôleur (12) est adapté lorsque le circuit de réception LF a reçu un signal de réveil LF,
émettre un signal UWB destiné à être reçu par une interface UWB du véhicule couplée à l'unité de commande embarquée,
recevoir un signal de réponse UWB,
de détecter la différence de temps entre l'émission du signal UWB et la réception du signal de réponse UWB,
de vérifier que la différence de temps ou une valeur dérivée de la différence de temps ne dépasse pas une valeur maximale prédéfinie, et
en fonction du résultat du contrôle, transmettre au calculateur embarqué un signal radio présentant une valeur de validation
le transmetteur d'identité étant conçu pour contrôler un certain nombre de signaux LF en vue d'une identification, pour détecter des valeurs d'intensité de signal pour les signaux LF et pour répondre à la réception des signaux LF par un signal de réponse HF qui est
l'identifiant du signal LF ayant la valeur d'intensité de signal la plus forte et/ou
comprend une liste des identifiants d'identité avec les valeurs d'intensité de signal associées,
dans lequel le système d'authentification comprend le transmetteur ID portable et un dispositif d'authentification côté véhicule, le dispositif d'authentification comprenant un certain nombre d'antennes UWB- avec au moins une première antenne UWB et une deuxième antenne UWB qui sont disposées à distance l'une de l'autre sur le véhicule,
ledit procédé comprenant au moins les étapes suivantes :
A) sélection d'une antenne UWB par un appareil de commande embarqué dans le véhicule parmi le nombre d'antennes UWB du dispositif d'authentification en tant qu'antenne UWB sélectionnée, la sélection de l'antenne UWB s'effectuant au moins en fonction d'une intensité de signal de réception ou de plusieurs intensités de signal de réception de l'au moins un signal LF qui est émis entre l'interface LF du dispositif d'authentification et le transmetteur ID ;
B) commander l'antenne UWB sélectionnée pour effectuer la communication UWB entre le transmetteur ID et le dispositif d'authentification ;
C) effectuer la communication UWB entre le transmetteur ID et le dispositif d'authentification ;
D) détecter un temps de propagation d'un signal UWB de la communication UWB entre le transmetteur ID et l'antenne UWB sélectionnée ;
E) vérifier si le temps de propagation du signal UWB est inférieur à un temps de propagation maximal prédéfini, le signal UWB étant détecté et évalué par le codeur ID.

12. Procédé selon la revendication 11, dans lequel les étapes B) à E) sont effectuées avec une première antenne UWB sélectionnée et,
si le temps de propagation du signal UWB entre le transmetteur ID et la première antenne sélectionnée est supérieur à un temps de propagation maximal prédéfini,
au moins les étapes B) à E) sont effectuées avec une seconde antenne UWB sélectionnée pour vérifier si le temps de propagation du signal UWB entre le transmetteur ID et la seconde antenne sélectionnée est inférieur au temps de propagation maximum prédéterminé représentant une position du transmetteur ID dans un espace prédéterminé entourant la seconde antenne UWB sélectionnée.
